# EUROPÄISCHE PATENTSCHRIFT

(11) **EP 2 143 117 B1**
(45) Veröffentlichungstag und Bekanntmachung des Hinweises auf die Patenterteilung: **03.08.2011**
(21) Anmeldenummer: 08749865.5
(22) Anmeldetag: 29.04.2008
(51) Int. Cl.: H01G 4/40, H01G 4/30, H01C 7/10

(54) **ELEKTRISCHES VIELSCHICHTBAUELEMENT MIT ELEKTRISCH NICHT KONTAKTIERTER ABSCHIRMSTRUKTUR**
ELECTRIC MULTI-LAYER COMPONENT WITH ELECTRICALLY NON-CONTACTED PROTECTIVE STRUCTURE
COMPOSANT ÉLECTRIQUE MULTICOUCHE COMPORTANT UNE STRUCTURE DE BLINDAGE SANS CONTACT ÉLECTRIQUE

(30) Priorität: 03.05.2007 DE 102007020783
(43) Veröffentlichungstag der Anmeldung: 13.01.2010
(73) Patentinhaber: Epcos AG, 81669 München (DE)
(72) Erfinder: FEICHTINGER, Thomas, A-8010 Graz (AT)
(74) Vertreter: Epping - Hermann - Fischer
(86) Internationale Anmeldenummer: PCT/EP2008/055264
(87) Internationale Veröffentlichungsnummer: WO 2008/135466

(56) Entgegenhaltungen:
- EP-A- 1 538 641
- JP-A- 2002 033 634
- JP-A- 2006 135 141

## Beschreibung

Es wird ein elektrisches Vielschichtbauelement, insbesondere ein elektrisches Filterbauelement, beschrieben.

Aus DE 10224565 A1 ist ein Vielschichtbauelement bekannt, das eine Widerstandsstruktur aufweist.

In der JP 2002 033634 A ist ein elektrisches Vielschichtbauelement mit einem Grundkörper beschrieben, welcher einen Stapel aus abwechselnd übereinander angeordneten dielektrischen Schichten und Elektrodenschichten sowie eine elektrisch unkontaktierte Abschirmstruktur in Form einer Abschirmschicht aufweist.

Eine zu lösende Aufgabe besteht darin, ein elektrisches Bauelement anzugeben, welches mit geringer herstellungstechnischer Anpassung und bei möglichst geringer Größe unterschiedliche elektrische Funktionen aufweisen könnte.

Eine weitere zu lösende Aufgabe besteht darin, ein elektrisches Bauelement anzugeben, das bei möglichst geringer Größe eine möglichst hohe Integrationsdichte bezogen auf die Schaltelemente einer im Bauelement integrierten elektrischen Schaltung aufweist.

Eine weitere Zu lösende Aufgabe besteht darin, ein elektrisches Banelement anzugeben, das eine hohe Einfügedämpfung aufweist. Die Aufgaben werben erfindungsgemäß gelöst durch den Gegenstand nach Anspruch 1.

Es wird ein elektrisches Vielschichtbauelement mit einem Grundkörper angegeben, der einen Stapel mit abwechselnd übereinander angeordneten dielektrischen Schichten und Elektrodenschichten aufweist. Darüber hinaus weist es eine elektrisch unkontaktierte Abschirmstruktur auf. Vorzugsweise ist die elektromagnetische Abschirmstruktur gänzlich, d.h., von allen Seiten her, von dielektrischem Materialien umgeben. Dadurch kann sich eine besonders effektive Abschirmfunktion entfalten, da die elektromagnetische Abschirmstruktur sowohl von außen als auch von innen elektrisch unkontaktiert ist. Die Abschirmstruktur kann als metallische bzw. eine ein Metall enthaltende Schicht, insbesondere auch als Abschirmelektrode bzw. als schwebende Abschirmelektrode betrachtet werden.

Die elektromagnetische Abschirmstruktur hat die Funktion, bestimmte Bereiche des Vielschichtbauelements, beispielsweise Bereiche des den Stapel aufweisenden Grundkörpers, vor Beeinflussung durch elektromagnetische Felder zu schützen. Dabei könnte die Abschirmstruktur beispielsweise die Streuung von elektromagnetischen Feldern aufgrund von Streukapazitäten oder parasitären elektromagnetischen Störungen unterbrechen.

Das elektrische Vielschichtbauelement umfasst vorzugsweise mehrere nebeneinander angeordnete Stapel von Elektrodenschichten. Diese können in lateraler oder in vertikaler Richtung nebeneinander angeordnet sein. Ein Stapel von Elektrodenschichten wird gebildet durch abwechselnd übereinander angeordnete Elektrodenschichten, wobei nebeneinander angeordnete, zu verschiedenen Stapeln gehörende Elektrodenschichten auf einer gemeinsamen dielektrischen Schicht aufgebracht sein können. Somit umfasst der Grundkörper beispielsweise einen einzigen Stapel von durchgehenden dielektrischen Schichten die in lateraler Richtung an mehreren Stellen mit Elektrodenschichten, gegebenenfalls mit unterschiedlichen Strukturen, versehen sind.

Das Vielschichtbauelement umfasst nach einer Ausführungsform Außenkontakte, wobei jeder Außenkontakt mit Elektrodenschichten kontaktiert sein kann, welche einen gemeinsamen elektrischen Pol tragen. Dabei können die Außenkontakte an verschiedenen Außen- bzw. Seitenflächen des Vielschichtbauelements angeordnet sein. Mit der Ausnahme der Abschirmstruktur kann daher jede Elektrodenschicht bis an die Seitenfläche des Grundkörpers herausgeführt sein.

Bei einem quaderförmigen Grundkörper könnte beispielsweise an jeder der vier Seitenwände des Grundkörpers zumindest ein Außenkontakt angeordnet sein.

Das erfindunsgemäße Vielschichtbauelement umfasst eine Widerstandsstruktur. Diese könnte beispielsweise im Grundkörper integriert oder an einer Außenfläche des Grundkörpers aufgebracht sein. Die Widerstandsstruktur kann Bestandteil eines vom elektrischen Vielschichtbauelement umfassten elektrischen Filters sein. Insbesondere kann der Widerstand als Bestandteil eines ESD-Filters, d.h., eines elektrostatischen Entladungsfilters oder eines EMI-Filters, d.h. eines elektromagnetischen Interferenzfilters bzw. Filterarrays, ausgeführt sein.

Die Widerstandsstruktur ist bevorzugt durch eine Widerstandsbahn gebildet, welche beispielsweise mäanderförmig ausgeführt sein kann. Die Widerstandstruktur ist an je einem Ende vorzugsweise mit einem Außenkontakt kontaktiert, welcher seinerseits mit zumindest einer Elektrodenschicht kontaktiert sein kann.

Vorzugsweise ist gemäß einer Ausführungsform des Vielschichtbauelements die Abschirmstruktur der Widerstandsstruktur in Stapelrichtung benachbart. Sie kann jedoch auch von der Widerstandsstruktur durch mehrere Schichten, beispielsweise dielektrische und/oder Elektrodenschichten, beabstandet sein.

Es wird bevorzugt, dass die Abschirmstruktur dort im Vielschichtbauelement angeordnet ist, wo sie einen im Vielschichtbauelement vorhandenen Widerstand von einem Teil des Vielschichtbauelements abschirmt. Dieser Teil des Vielschichtbauelements könnte beispielsweise der Ursprung von Streufeldern oder von elektromagnetischen Feldern sein. Gemäß einer Ausführungsform des elektrischen Vielschichtbauelements weist es mehrere Widerstandsstrukturen auf. Diese können auf einer Außenfläche des Grundkörpers angeordnet sein. Alternativ befindet sich lediglich eine Widerstandsstruktur auf der Außenfläche des Grundkörpers; eine andere ist im Grundkörper integriert. Eine weitere Ausführungsform sieht vor, dass alle Widerstandsstrukturen im Grundkörper integriert sind. Mehrere Widerstandsstrukturen können über die Höhe bzw. Stapelhöhe des Vielschichtbauelements auf unterschiedlichen Ebenen verteilt sein. Sie können jeweils auf einer dielektrischen Schicht des Stapels angeordnet sein.

Die elektromagnetische Abschirmstruktur ist vorzugsweise einer Widerstandsstruktur des Vielschichtbauelements in Stapelrichtung benachbart. Das hat den Vorteil, dass mögliche Störfelder aus Bereichen auf der der Widerstandsstruktur abgewandten Seite der Abschirmelektrode so großflächig wie möglich abgeschirmt werden. Die Abschirmelektrode kann jedoch auch mittels mehrere Schichten vom Widerstand beabstandet sein.

Gemäß einer Ausführungsform des elektrischen Vielschichtbauelements ist die Abschirmstruktur derart angeordnet, dass sie eine Elektrodenschicht vor elektromagnetischen Störfeldern schützt. Dabei kann sie der Elektrodenschicht in Stapelrichtung ebenfalls benachbart sein.

Erfindunsgemäße ist vorgesehen, dass die Abschirmstruktur zwischen einer Widerstandsstruktur und einer Elektrodenschicht des Vielschichtbauelements angeordnet ist. Auch kann die Abschirmstruktur zwischen zwei Elektrodenschichten angeordnet sein.

Gemäß einer Ausführungsform des Vielschichtbauelements weist es eine Masseelektrode auf, auf welche Signale bestimmter Frequenzen abgeleitet werden. Die Masseelektrode kann mit mehreren Elektrodenschichten zusammenwirken.

Das elektrische Vielschichtbauelement umfasst nach einer Ausführungsform eine Kapazität welche zwischen zwei elektrisch unterschiedlich gepolten Elektrodenschichten und einer dazwischenliegenden dielektrischen Schicht gebildet sein kann.

Die dielektrischen Schichten des Vielschichtbauelements können eine Kondensatorkeramik oder eine Varistorkeramik enthalten. Je nach Verwendung eines der Materialien kann das elektrische Vielschichtbauelement einen Kondensator oder einen Varistor umfassen. Wo mehrere Kapazitäten zwischen mehreren Elektrodenschichten und dielektrischen Schichten erzeugt werden, können jeweils Vielschichtkondensatoren bzw. Vielschichtvaristoren geschaffen werden.

Ein vom elektrischen Vielschichtbauelement umfasster Vielschichtkondensator weist einen Stapel von abwechselnd übereinander angeordneten dielektrischen Schichten und Elektrodenschichten auf. In lateraler Richtung umfasst das Vielschichtbauelement als Array vorzugsweise mehrere nebeneinander angeordnete Vielschichtkondensatoren, wobei dieselben dielektrischen Schichten des Grundkörpers für mehrere Vielschichtkondensatoren nutzbar sind. In analoger Weise, jedoch unter Verwendung einer Varistorkeramik, könnte ein Vielschichtvaristor bzw. ein Vielschichtvaristorarray geschaffen werden.

Gemäß einer Ausführungsform des elektrischen Vielschichtbauelements umfasst es ein ESD bzw. ein EMI Filter. Dabei werden vorzugsweise zwei Schaltgruppen, jeweils aufweisend zumindest eine Kapazität und zumindest einen Varistor, zwischen einem Signaleingang und einem Signalausgang parallel geschaltet. Zwischen diesen Schaltgruppen ist ein Widerstand geschaltet. Bei hohen Spannungen wird der Widerstand des Varistors klein und es können diese Signale über die Masseelektrode abgeleitet werden.

Die Kapazitäten, der Widerstand sowie der Varistor können in der bereits beschriebenen Art aufgebaut sein. Sie können als Π-Filter verschaltet sein.

Mehrere Kapazitäten im Vielschichtbauelement können denselben oder unterschiedliche Kapazitätswerte aufweisen. Analoges gilt für gegebenenfalls vorhandene mehreren Widerständen. Gleichheit unter Kapazitäten oder Widerständen könnte beispielsweise anhand einer geeigneten Materialwahl oder anhand der Einstellung jeweils der Flächen von Elektrodenschichten oder Widerstandsstrukturen erreicht werden.

Die beschriebenen Gegenstände werden anhand der folgenden Ausführungsbeispiele und Figuren näher erläutert. Dabei zeigt / zeigen:
- Figur 1a: eine Draufsicht eines Schnitts eines Vielschicht- bauelements mit zwei mäanderförmigen Widerstands- strukturen,
- Figur 1b: eine Draufsicht eines Schnitts eines Vielschicht- bauelements mit alternativen Widerstandsstrukturen,
- Figur 1c: eine Draufsicht eines Schnitts eines Vielschicht- bauelements mit einer Abschirmelektrode,
- Figur 1d: eine Draufsicht eines Schnitts eines Vielschicht- bauelements mit Elektroden zur Erzeugung von Kapa- zitäten bzw. Varistoren,
- Figur 1e: eine Draufsicht eines Schnitts eines Vielschicht- bauelements mit einer Masseelektrode,
- Figur 1f: eine Draufsicht eines Schnitts eines Vielschicht- bauelements mit einer dielektrischen Schicht,
- Figur 2a: eine Seitenansicht eines Schnitts eines Viel- schichtbauelements mit einem ersten Schichtaufbau,
- Figur 2b: eine Seitenansicht eines Schnitts eines Viel- schichtbauelements mit einem zweiten Schichtaufbau,
- Figuren 3a und 3b: Schaltdiagramme zur Darstellung der Ver- schaltung von Schaltelementen eines Viel- schichtbauelements,
- Figur 3c: eine schematische Darstellung der Anordnung von Au- ßenkontakten eines Vielschichtbauelements,
- Figur 4: eine Grafik zur Darstellung unterschiedlicher Ein- fügedämpfungen von Π-Filtern mit und ohne einer eingebauten elektromagnetischen Abschirmstruktur.

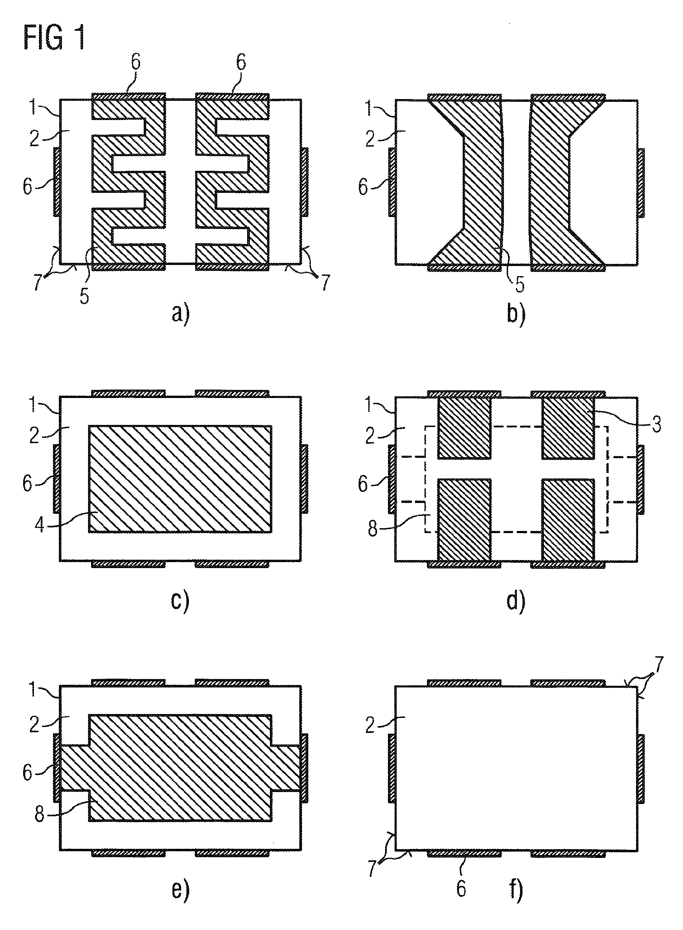

Figuren 1a bis 1f zeigen unterschiedliche Schichtansichten eines Vielschichtbauelements welches mehrere lateral nebeneinander angeordnete Stapel von Elektrodenschichten 3 aufweist. Diese sind auf gemeinsame dielektrische Schichten 2 aufgebracht. Die Stapel der Elektrodenschichten ergeben in Wechselwirkung mit den dielektrischen Schichten parallel geschaltete Kapazitäten. Diese können je nach Verwendung eines geeigneten dielektrischen Materials einen Vielschichtkondensator oder einen Vielschichtvaristor ausbilden.

Das Vielschichtbauelement weist vorzugsweise mehrere Außenkontakte 6 auf, die an unterschiedlichen Seitenflächen 7 des Grundkörpers 1 angeordnet sein können. Die Außenkontakte 6 können als auf die Außenfläche des Grundkörpers aufgebrachte elektrisch leitende Schichten realisiert sein. Nach einer Ausführungsform umklammern diese Außenkontakte den Grundkörper, indem sie bis in den Randbereich der Stirnflächen des Grundkörpers 1 ausgeführt sind. Die Außenkontakte müssen jedoch nicht zwingend als Schichten ausgeführt sein; sie können stattdessen stiftförmig mit kreis- oder halbkreisförmigen Querschnitt ausgeführt sein. Sie können ein Material enthalten, welches für Elektrodenschichten des Vielschichtbauelements verwendet wird. Zum Verlöten mit einer Leiterplatte bzw. mit einer Montagefläche können die Außenkontakte 6 an ihren dem Grundkörper abgewandten Seiten ein Material enthalten, welches sich bei möglichst geringem elektrischen Übergangswiderstand mit der Leiterplatte bzw. mit der Montagefläche verlöten lässt.

Figur 1a zeigt eine Draufsicht auf eine Ebene des Vielschichtbauelements, in der eine dielektrische Schicht 2 vorhanden ist. Auf diese sind zwei mäanderförmige Widerstandsstrukturen 5 aufgebracht, welche jeweils an beiden Enden mit Außenkontakten 6 kontaktiert sind. Die mäanderförmigen Widerstandsbahnen 5 haben gegenüber geradlinigen Widerstandsbahnen den Vorteil, dass entsprechend ihrer verhältnismäßig großen Längen hohe Widerstände erzielt werden können.

Figur 1b zeigt eine Draufsicht auf eine Ebene des Vielschichtbauelements in der zwei flächige Widerstandsstrukturen 5' auf einer dielektrischen Schichte 2 aufgebracht sind. Die Widerstandsstrukturen sind als Widerstandsbahnen realisiert, deren Breiten im Randbereich der dielektrischen Schicht 2 größer sind, als im inneren Bereich. Bezogen auf ihre Breite weisen sie verjüngende Abschnitte auf. Eine solche Konstruktion hat den Vorteil, dass Übergangswiderstände zwischen den Außenkontakten 6 und den Widerstandsbahnen 5' möglichst gering gehalten werden können.

Bezogen auf die Höhe des Vielschichtbauelements liegen die Widerstandsstrukturen im Verhältnis zu den nachfolgend beschriebenen Schaltelementen an oberster Position. Dabei können sie auf der Oberfläche des Grundkörpers 1 aufgebracht sein oder im oberen Bereich des Grundkörpers integriert sein. Auch können Widerstandsstrukturen auf beiden Stirnflächen des Grundkörpers aufgebracht sein. Sie können jedoch auf beliebiger anderer Ebene im Grundkörper integriert sein. Die Widerstandsstrukturen können mit einer oder mehreren Passivierungsschichten versehen sein, insbesondere dann, wenn sie auf der Oberfläche des Grundkörpers angeordnet sind. Die Passivierungsschicht enthält vorzugsweise Glas.

Figur 1c zeigt eine Draufsicht auf eine Ebene des Vielschichtbauelements, welche vorzugsweise der zuvor beschriebenen Widerstandsebene in Stapelrichtung benachbart ist. Es wird eine dielektrische Schicht 2 gezeigt, auf die eine schwebende Abschirmstruktur 4 aufgebracht ist. Diese ist aufgrund der mangelnden Kontaktierung mit den Außenkontakten bzw. aufgrund der mangelnden Kontaktierung mit jeglichem elektrischen Kontakt sowie aufgrund des Laminierens der dielektrischen Schicht mit einer benachbarten dielektrischen Schicht insgesamt von dielektrischem Material umgeben. Die Abschirmstruktur 4 erreicht eine elektromagnetische Entkopplung der Widerstände bzw. der Widerstandsstrukturen von übrigen Teilen, beispielsweise von unter ihnen liegende Schichten sowie auf diese Schichten aufgebrachte elektrisch aktive Strukturen, des Vielschichtbauelements.

Figur 1d zeigt eine Draufsicht auf eine Ebene des Vielschichtbauelements, in der vier rechteckige Elektrodenschichten 3 auf einer gemeinsamen dielektrischen Schicht 2 angeordnet sind. Jede Elektrodenschicht 3 ist mit einem Ende mit einem vorzugsweise an einer Längsseite des Grundkörpers 1 angeordneten Außenkontakt 6 verbunden. Die Elektrodenschichten können unterschiedliche Längen und Breiten aufweisen. Elektrodenschichten 3, welche mit auf gegenüberliegenden Seitenflächen des Grundkörpers angeordneten Außenkontakten kontaktiert sind, können sich unterschiedlich tief ins Innere des Grundkörpers erstrecken. Jeder Stapel von Elektrodenschichten sowie dazwischen angeordneten dielektrischen Schichten kann einen Vielschichtkondensator bzw. einen Vielschichtvaristor je nach Verwendung eines geeigneten Dielektrikums bilden. Der Figur ist entsprechend zu entnehmen, dass das Vielschichtbauelement vier Vielschichtkondensatoren- bzw. varistoren aufweist. Es können jedoch mehr als diese Anzahl von Vielschichtkondensatoren- bzw. varistoren gebildet sein, wobei mehrere Stapel von Elektrodenschichten in Längsrichtung des Vielschichtbauelements nebeneinander angeordnet sein können, die auf gemeinsame dielektrische Schichten angeordnet sein können.

Das Vielschichtbauelement könnte mit vier Vielschichtkondensatoren in der beschriebenen Art eine Stirnfläche von weniger als 3, vorzugsweise weniger als 2,5 mm² aufweisen. Dabei wird bevorzugt, dass das Vielschichtbauelement zwei Widerstandsstrukturen aufweist. Bei beispielsweise acht Vielschichtkondensatoren weist das Vielschichtbauelement beispielsweise eine Stirnfläche von weniger als 6, vorzugsweise weniger als 5,2 mm² auf. Es hat sich dabei als günstig herausgestellt, wenn das Vielschichtbauelement in diesem Falle vier Widerstandsstrukturen aufweist, die mittels Abschirmstrukturen voneinander abgeschirmt werden.

Insbesondere hat es sich als günstig herausgestellt, wenn die Anzahl an im Vielschichtbauelement vorhandenen Widerstandsstrukturen die Hälfte der Zahl der Vielschichtkondensatoren- bzw. varistoren des Vielschichtbauelements bzw. die Hälfte der Anzahl von auf einer gemeinsamen dielektrischen Schicht aufgebrachten Elektrodenschichten entspricht.

Die mit einer gestrichelten Linie gezeigte Struktur der Figur 1d stellt eine Masseelektrode 8 dar, welche mit der folgenden Figur näher beschrieben wird.

Figur 1e zeigt eine Draufsicht auf eine Ebene des Vielschichtbauelements, in der eine auf eine dielektrische Schicht 2 aufgebrachte Masseelektrode 8 vorhanden ist. An beiden Enden ist diese Masseelektrode mit einem Außenkontakt 6 verbunden. Die Masseelektrode wirkt mit den zuvor beschriebenen mehreren Elektrodenschichten zusammen und ist ihnen vorzugsweise in Stapelrichtung benachbart. Sie kann eine von innen nach außen verjüngende, insbesondere eine kreuzförmige, Struktur aufweisen. Die Masseelektrode kann mit mehreren

Vielschichtkondensatoren bzw. Vielschichtvaristoren zusammenwirken bzw. durch deren jeweiligen Stapel geführt sein.

Figur 1f zeigt eine Ebene des Vielschichtbauelements, in der lediglich eine dielektrische Schicht vorhanden ist. Diese könnte beispielsweise zwischen dielektrischen Schichten mit strukturierten Oberflächen oder beispielsweise an der Unterseite des Grundkörpers angeordnet sein.

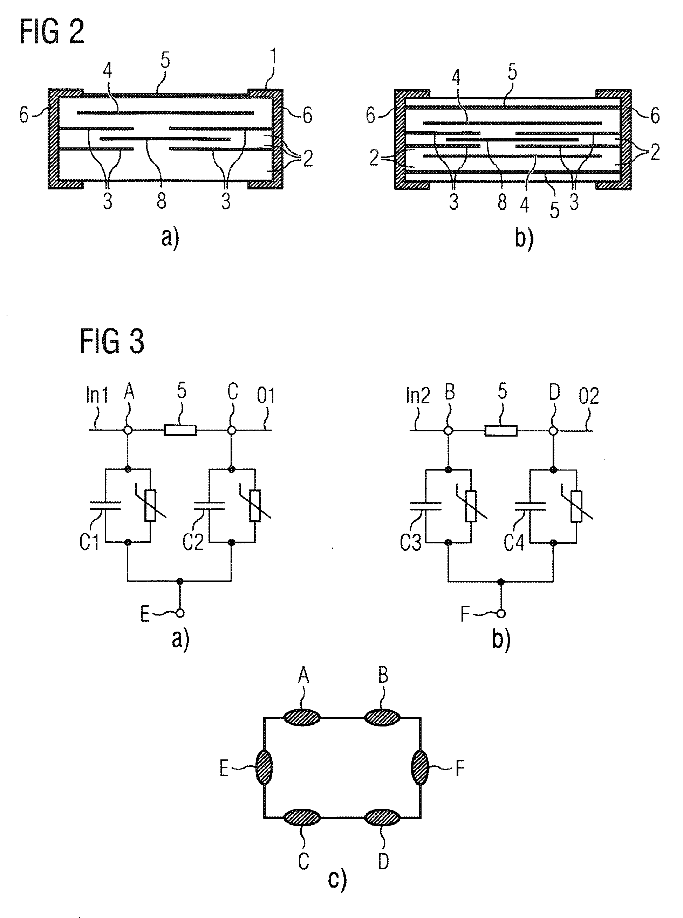

Figur 2a zeigt einen ersten Schichtaufbau eines elektrischen Vielschichtbauelements, bei dem an einer oberen Stirnfläche (bezogen auf die Montage des Vielschichtbauelements auf eine Montagefläche) des Grundkörpers 1 eine Widerstandsstruktur 5 angeordnet ist. Diese verbindet Außenkontakte 6, die den Grundkörper seitlich, inklusive den Kanten, abdecken bzw. umklammern. Unterhalb der Widerstandsstruktur ist eine Abschirmstruktur 4 im Grundkörper integriert und der Widerstandsstruktur im Vergleich zu übrigen elektrisch aktiven Strukturen des Vielschichtbauelements, wie zum Beispiel Elektrodenschichten oder Masseelektroden (nicht jedoch dielektrische Schichten), benachbart. An nächster Stelle unterhalb der Abschirmstruktur 4 befinden sich mit der Ausnahme einer dielektrischen Schicht zwei Elektrodenschichten 3, welche auf einer gemeinsamen dielektrischen Schicht angeordnet sind. Auf der darunter liegende Ebene des Vielschichtbauelements ist eine Masseelektrode vorhanden. Unter dieser befinden sich wieder Elektrodenschichten 3 in derselben Anordnung, wie die weiter oben angeordneten Elektrodenschichten.

Elektrodenschichten 3, welche mit einem gemeinsamen Außenkontakt 6 kontaktiert sind und mit einer Gegenelektrode zusammenwirken (in diesem Falle die Masseelektrode), bilden einen ersten Vielschichtkondensator, wenn für die dazwischen liegenden dielektrische Schicht eine Kondensatorkeramik verwendet wird, und einen Vielschichtvaristor, wenn für die entsprechende dielektrische Schicht eine Varistorkeramik verwendet wird. Somit werden mit diesem Beispiel bereits zwei Vielschichtkondensatoren bzw. Vielschichtvaristoren gezeigt, die sich gegenüberliegen.

Figur 2b zeigt einen weiteren Schichtaufbau eines elektrischen Vielschichtbauelements, bei dem an oberster Stelle eine Widerstandsstruktur 5 im Grundkörper integriert ist. Darunter ist eine erste Abschirmstruktur 4 angeordnet, gefolgt von Elektrodenschichten 3 in einer Anordnung gemäß dem vorhergehenden Beispiel. Unterhalb der Elektrodenschichten 3 ist als Gegenelektrode eine Masseelektrode 8 angeordnet, gefolgt von weiteren Elektrodenschichten 3. Unterhalb des letzten Satzes von Elektrodenschichten 3 ist eine zweite Abschirmstruktur 5 im Grundkörper integriert. Diese wird gefolgt von einer oder mehreren dielektrischen Schichten 2, welche die untere Außenfläche des Grundkörpers bildet bzw. bilden.

Ein Vielschichtbauelement mit einer Abschirmstruktur und zumindest einem Widerstand kann folgenden Schichtaufbau aufweisen, wobei n eine ganze Zahl ist und die übrigen Nummern den Bezugzeichen der Figuren bzw. den von den Bezugszeichen gezeigten Gegenständen des Vielschichtbauelements entsprechen. Die Pfeile zeigen die Reihenfolge von Schicht zu Schicht.
a) 5 -> 4 -> 3 -> 8 -> 3
b) 5' -> 4 -> 3 -> 8 -> 3
c) 5 -> 4 -> 3 -> 8 -> 3 -> 5
d) 5 -> 4 -> 3 -> 8 -> 3 -> 4
e) 5 -> 4 -> 3 -> 8 -> 3 -> 4 -> 5
f) nx3 -> 5 -> nx3 -> 4 -> nx3 -> nx(3 -> 8 -> 3)
g) f) + nx3 -> 4
h) g) + nx3 -> 5 -> nx3

Figuren 3a und 3b sowie Figuren 3b und 3c sind jeweils zusammen zu betrachten. Figur 3c zeigt schematisch eine Anordnung von Außenkontakten A bis F eines Vielschichtbauelements.

Figur 3a zeigt ein Schaltdiagramm für ein erstes Pi-Filter, welches einen ersten Teil eines bevorzugten ESD bzw. EMI Filters bildet. Das erste Π-Filter umfasst:
- ein erstes Paar von Elektrodenschichten 3, welche übereinander angeordnet sind und mit demselben Außenkontakt A kontaktiert sind,
- ein zweites Paar von Elektrodenschichten, welche übereinander angeordnet sind und mit im Vergleich zum ersten Paar von Elektrodenschichten gegenüberliegenden Außenkontakt C kontaktiert sind, wobei
- zwischen beiden Paaren von übereinander angeordneten Elektrodenschichten dielektrische Schichten sowie eine gemeinsame Masseelektrode 8 angeordnet sind und die Masseelektrode für die Elektrodenpaare jeweils eine Gegenelektrode bildet.

Der Außenkontakt A (siehe auch Figur 3c) ist in Figur 3a mit In1 verbunden, wobei es sich bei In1 um eine Eingangsleitung handelt. Der Außenkontakt C (siehe auch Figur 3c) ist in Figur 3a mit O1 verbunden, wobei es sich bei 01 um eine Ausgangsleitung handelt.

Je nach Filtertyp enthalten die dielektrischen Schichten zwischen den Elektroden der jeweiligen Elektrodenpaare entweder eine Varistorkeramik oder eine Kondensatorkeramik.

Somit entsteht zwischen dem ersten Paar von Elektrodenschichten und der Masseelektrode eine Kapazität C1. Zwischen dem zweiten Paar von Elektrodenschichten, das dem ersten Paar gegenüberliegt, entsteht eine weitere Kapazität C2.

Die Außenkontakte A und C bzw. die Eingangsleitung ln1 und die Ausgangsleitung 01 sind mittels einer Widerstandsstruktur 5 miteinander verbunden, die vorzugsweise an der Oberfläche des Grundkörpers des Vielschichtbauelements angeordnet ist. Die Widerstandsstruktur kann beispielsweise einen Wert von zwischen 90 und 110 Ω aufweisen.

Ein so ausgebildetes Π-Filter wirkt als Tiefpassfilter, indem Kapazitäten C1 und C2 sowie der Widerstand 5 zusammenwirken, wenn das Filter mit Spannungen innerhalb eines bestimmten Spannungswertbereiches beaufschlagt wird. Der Tiefpassfilter filtert gegebenenfalls störende hochfrequente Signalkomponenten aus. Die Beaufschlagung des Vielschichtbauelements mit höheren Spannungen führt jedoch zur Aktivierung eines Varistoreffekts, wenn als dielektrisches Material zwischen den Elektroden des ersten bzw. des zweiten Elektrodenpaares eine Varistorkeramik verwendet wird. In diesem Falle wird das an und für sich mit einem hohen Widerstandswert gekennzeichnete dielektrische Material elektrisch leitend und leitet das mit der hohen Spannung einhergehende Signal über die Masseelektrode bzw. über den mit der Masseelektrode verbundenen Außenkontakt E vom Vielschichtbauelement ab. Ein Filter der beschriebenen Art lässt sich zum Herausfiltern von Kommunikationssignalen bzw. Rauschsignalen sowie zum Ableiten von Überspannungen einsetzen. Dabei findet das elektrische Vielschichtbauelement mit seiner Filterfunktion beispielsweise als Hardwarekomponente in einem mobilen Kommunikationsgerät und/oder in einem Rechner Verwendung.

Figur 3b zeigt ein Schaltdiagramm für ein zweites Π-Filter, welches einen zweiten Teil eines bevorzugten ESD bzw. EMI Filters bildet und vorzugsweise mit dem beschriebenen ersten Π-Filter parallel geschaltet ist. Das zweite Π-Filter umfasst:
- ein drittes Paar von Elektrodenschichten 3, welche übereinander angeordnet sind und mit demselben Außenkontakt B kontaktiert sind,
- ein viertes Paar von Elektrodenschichten 3, welche übereinander angeordnet sind und mit im Vergleich zum dritten Paar von Elektrodenschichten gegenüberliegenden Außenkontakt D kontaktiert sind, wobei
- zwischen beiden Paaren von übereinander angeordneten Elektrodenschichten dielektrische Schichten sowie eine gemeinsame Masseelektrode 8 angeordnet sind und die Masseelektrode für die Elektrodenpaare jeweils eine Gegenelektrode bildet.

Der Außenkontakt B (siehe auch Figur 3c) ist in Figur 3b mit ln2 verbunden, wobei es sich bei In2 um eine weitere Eingangsleitung handelt. Der Außenkontakt D (siehe auch Figur 3c) ist in Figur 3b mit 02 verbunden, wobei es sich bei 02 um eine weitere Ausgangsleitung handelt.

Eingangsleitungen und Ausgangsleitungen können als Leiterbahnen auf einer Leiterplatine ausgeführt sein.

Je nach Filtertyp enthalten die dielektrischen Schichten zwischen den Elektrodenschichten der jeweiligen Elektrodenschichtenpaare entweder eine Varistorkeramik oder eine Kondensatorkeramik. Somit entsteht zwischen dem dritten Paar von Elektrodenschichten und der Masseelektrode eine Kapazität C3. Zwischen dem vierten Paar von Elektrodenschichten, das dem dritten Paar gegenüberliegt, entsteht weitere eine Kapazität C4.

Die Außenkontakte B und D sind mittels einer im Vielschichtbauelement enthaltenden Widerstandsstruktur 5 miteinander verbunden. Die Widerstandsstruktur kann beispielsweise einen Wert von zwischen 90 und 110 Ω aufweisen.

Ein so ausgebildetes zweites Π-Filter agiert in der selben Art und Weise wie das zuvor mit der Figur 3a beschriebene erste Π-Filter, wobei mittels eines Varistoreffekts abgeleitete Signale nicht über den Außenkontakt E, sondern diesmal über den Außenkontakt F abgeleitet werden.

Erste und dritte sowie zweite und vierte Elektrodenpaare können im Vielschichtbauelement lateral nebeneinander angeordnet sind.

In einem einzigen gemäß den Figuren 3a bis 3c verschalteten Vielschichtbauelement sind bereits zwei Π-Filter integriert. Je nach Anzahl der verwendeten Elektrodenschichten und Außenkontakte könnten mehr Π-Filter im Vielschichtbauelement integriert werden. Es wird somit ein Bauelement mit hoher Integrationsdichte bzw. mit einfachen Möglichkeiten zur hohen Integrationsdichte geschaffen.

Anstelle von einzelnen Elektrodenpaaren mit jeweils einer dazwischen liegenden Gegenelektrode könnte sich dieses Muster über die Höhe des Vielschichtbauelements mehrfach wiederholen. Hierdurch ließen sich dann Vielschichtkondensatoren bzw. Vielschichtvaristoren erzeugen, wobei ihre Kontaktierung von außen nach wie vor mittels der bereits beschriebenen Außenkontakte erfolgen könnte.

Die Widerstandsstrukturen können folgende Materialien enthalten: Rb0₂, Bi₂Ru₂O₇, C, Ti₂N, LaB₆.

Bevorzugte, in Elektrodenschichten enthaltene Materialien sind Ag, Pd, Pt, AgPd Legierungen, AgPt Legierungen, Cu oder Ni.

Die dielektrischen Schichten des Vielschichtbauelements können als Kondensatorkeramik ein Material aus den folgenden Kondensatorkeramikklassen enthalten: COG, X7R, Z5U, Y5V, HQM. Diese Materialen sind besonders dann geeignet, wenn das elektrische Vielschichtbauelement eine EMI-Filterfunktion aufweisen soll.

Die dielektrischen Schichten des Vielschichtbauelements können als Varistorkeramik ZnO-Bi oder ZnO-Pr enthalten. Diese Materialien sind besonders dann geeignet, wenn das elektrische Vielschichtbauelement eine EMI und / oder eine ESD-Filterfunktion aufweisen soll.

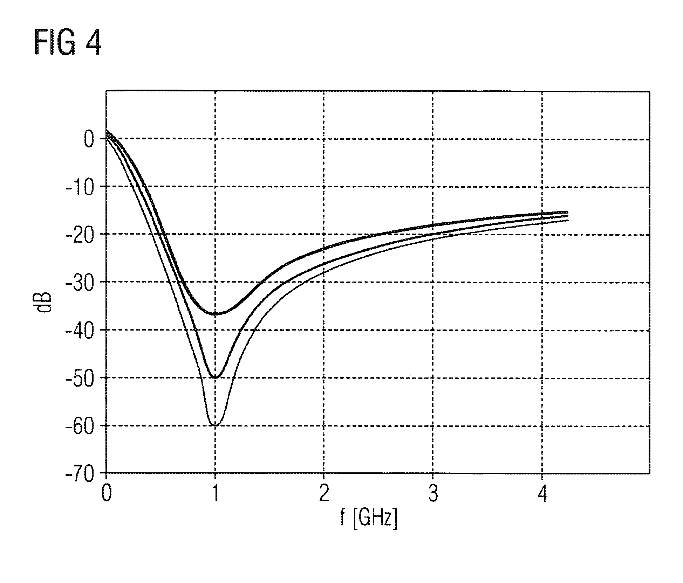

Figur 4 zeigt die Einfügedämpfung in dB eines Vielschichtbauelements in schematischer Weise für eingespeiste Signale, deren Frequenzen in GHz auf der horizontalen Achse markiert sind.

Die Kurve K1 zeigt die Einfügedämpfung eines Vielschichtbauelements mit einer Π-Filter Verschaltung, wobei das Vielschichtbauelement keine Abschirmstruktur aufweist. Hier liegt die maximale Einfügedämpfung bei ca. -35 dB bei einer Frequenz von 0,95 GHz.

Die Kurve K2 zeigt die Einfügedämpfung eines Vielschichtbauelements mit einer Π-Filter Verschaltung, wobei das Vielschichtbauelement lediglich eine Abschirmstruktur aufweist, die zwischen zwei Stapel von mehreren Elektrodenschichten angeordnet ist. Hier liegt die maximale Einfügedämpfung bei ca. -50 dB bei einer Frequenz von 1 GHz.

Die Kurve K3 zeigt die Einfügedämpfung eines Vielschichtbauelements mit einer Π-Filter Verschaltung, wobei das Vielschichtbauelement zwei Abschirmstrukturen und zwei durch die Abschirmstrukturen abgeschirmte Widerstandsstrukturen aufweist. Hier liegt die maximale Einfügedämpfung bei ca. -60 dB bei einer Frequenz von 1 GHz.

Mittels jeder zusätzlich eingebauten Abschirmstruktur wurde eine Erhöhung der Einfügedämpfung von zwischen 10 und 20 dB erreicht.

### Bezugszeichenliste

- 1: Grundkörper
- 2: dielektrische Schicht
- 3: Elektrodenschicht
- 4: Abschirmelektrode
- 5: Widerstandsstruktur
- 6: Außenkontakt
- 7: Seitenflächen des Grundkörpers
- 8: Masseelektrode
- A bis F: Außenkontakte, schematisch dargestellt
- In1: erste Eingangsleitung
- In2: zweite Eingangsleitung
- O1: erste Ausgangsleitung
- O2: zweite Ausgangsleitung

## Patentansprüche

1. Elektrisches Vielschichtbauelement
mit einem Grundkörper (1), welcher zumindest einen Stapel aus abwechselnd übereinander angeordneten dielektrischen Schichten (2) und Elektrodenschichten (3) sowie eine elektrisch unkontaktierte Abschirmstruktur (4) aufweist, **dadurch gekennzeichnet, dass**
der Grundkörper (1) zumindest eine Widerstandsstruktur (5) aufweist und
die Abschirmstruktur (4) zwischen einer Widerstandsstruktur (5) und einer Elektrodenschicht (3) angeordnet ist.

2. Elektrisches Vielschichtbauelement nach Anspruch 1, bei dem der Grundkörper (1) mehrere lateral nebeneinander angeordnete Stapel von Elektrodenschichten (3) aufweist.

3. Elektrisches Vielschichtbauelement nach einem der Ansprüche 1 oder 2, bei dem die Abschirmstruktur (4) eine metallische Schicht ist.

4. Elektrisches Vielschichtbauelement nach einem der Ansprüche 1 bis 3, bei dem die Widerstandsstruktur (5) an der Oberfläche des Grundkörpers (1) angeordnet ist.

5. Elektrisches Vielschichtbauelement nach einem der Ansprüche 1 bis 4, bei dem die Widerstandsstruktur (5) mit einer Passivierungsschicht versehen ist.

6. Elektrisches Vielschichtbauelement nach einem der Ansprüche 1 bis 3, bei dem die Widerstandsstruktur (5) im Grundkörper (1) integriert ist.

7. Elektrisches Vielschichtbauelement nach einem der Ansprüche 1 bis 6, bei dem die Abschirmstruktur (4) zwischen zwei Widerstandsstrukturen (5) angeordnet ist.

8. Elektrisches Vielschichtbauelement nach einem der Ansprüche 1 bis 7, bei dem die Widerstandsstruktur (5) zumindest eine der folgenden Materialien enthält: Rb0₂, Bi₂Ru₂O₇, C, Ti₂N, LaB₆.

9. Elektrisches Vielschichtbauelement nach einem der vorhergehenden Ansprüche, bei der die Abschirmstruktur (4) zwischen zwei Elektrodenschichten (3) angeordnet ist.

10. Elektrisches Vielschichtbauelement nach einem der vorhergehenden Ansprüche, bei dem der Grundkörper (1) eine Masseelektrode (8) aufweist, die mit mehreren Elektrodenschichten (3) zusammenwirkt.

11. Elektrisches Vielschichtbauelement nach einem der vorhergehenden Ansprüche, das zumindest einen Vielschichtkondensator aufweist, welcher durch übereinander gestapelte dielektrische Schichten (2) und Elektrodenschichten (3) gebildet ist.

12. Elektrisches Vielschichtbauelement nach einem der vorhergehenden Ansprüche, das zumindest einen Vielschichtvaristor aufweist, welcher durch übereinander gestapelte dielektrische Schichten (2) und Elektrodenschichten (3) gebildet ist.

13. Elektrisches Vielschichtbauelement nach einem der Ansprüche 1 bis 12, bei dem zumindest eine Kapazität durch ein mittels einer dielektrischen Schicht (2) und einer Elektrodenschicht (3) gebildetes Paar erzeugt ist und mit dem Widerstand zusammenwirkt, um ein Tiefpassfilter zu bilden.

## Claims

1. An electrical multi-layer component with a main body (1), which comprises at least one stack of dielectric layers (2) and electrode layers (3), arranged alternately one on top of the other, and an electrically non-contacted shielding structure (4), **characterized in that** the main body (1) comprises at least one resistance structure (5) and the shielding structure (4) is arranged between a resistance structure (5) and an electrode layer (3).

2. The electrical multi-layer component according to Claim 1, in which the main body (1) comprises a number of stacks of electrode layers (3) arranged laterally next to one another.

3. The electrical multi-layer component according to either of Claims 1 and 2, in which the shielding structure (4) is a metallic layer.

4. The electrical multi-layer component according to one of Claims 1 to 3, in which the resistance structure (5) is arranged on the surface of the main body (1).

5. The electrical multi-layer component according to one of Claims 1 to 4, in which the resistance structure (5) is provided with a passivation layer.

6. The electrical multi-layer component according to one of Claims 1 to 3, in which the resistance structure (5) is integrated in the main body (1).

7. The electrical multi-layer component according to one of Claims 1 to 6, in which the shielding structure (4) is arranged between two resistance structures (5).

8. The electrical multi-layer component according to one of Claims 1 to 7, in which the resistance structure (5) contains at least one of the following materials: RbO₂, Bi₂Ru₂O₇, C, Ti₂N, LaB₆.

9. The electrical multi-layer component according to one of the preceding claims, in which the shielding structure (4) is arranged between two electrode layers (3).

10. The electrical multi-layer component according to one of the preceding claims, in which the main body (1) comprises a ground electrode (8), which interacts with a number of electrode layers (3).

11. The electrical multi-layer component according to one of the preceding claims, which comprises at least one multi-layer capacitor which is formed by dielectric layers (2) and electrode layers (3) stacked one on top of the other.

12. The electrical multi-layer component according to one of the preceding claims, which comprises at least one multi-layer varistor which is formed by dielectric layers (2) and electrode layers (3) stacked one on top of the other.

13. The electrical multi-layer component according to one of Claims 1 to 12, in which at least one capacitance is produced by a pair formed by means of a dielectric layer (2) and an electrode layer (3) and interacts with the resistance to form a low-pass filter.

## Revendications

1. Composant électrique multicouche présentant un corps de base (1) doté d'au moins une pile de couches diélectriques (2) et de couches d'électrode (3) disposées les unes au-dessus des autres en alternance ainsi que d'une structure de blindage (4) non en contact électrique,
**caractérisé en ce que**
le corps de base (1) présente au moins une structure de résistance (5) et
**en ce que** la structure de blindage (4) est disposée entre une structure de résistance (5) et une couche d'électrode (3).

2. Composant électrique multicouche selon la revendication 1, dans lequel le corps de base (1) présente plusieurs piles de couches d'électrode (3) disposées latéralement les unes à côté des autres.

3. Composant électrique multicouche selon l'une des revendications 1 ou 2, dans lequel la structure de blindage (4) est une couche métallique.

4. Composant électrique multicouche selon l'une des revendications 1 à 3, dans lequel la structure de résistance (5) est disposée sur la surface du corps de base (1).

5. Composant électrique multicouche selon l'une des revendications 1 à 4, dans lequel la structure de résistance (5) est dotée d'une couche de passivation.

6. Composant électrique multicouche selon l'une des revendications 1 à 3, dans lequel la structure de résistance (5) est intégrée dans le corps de base (1).

7. Composant électrique multicouche selon l'une des revendications 1 à 6, dans lequel la structure de blindage (4) est disposée entre deux structures de résistance (5).

8. Composant électrique multicouche selon l'une des revendications 1 à 7, dans lequel la structure de résistance (5) contient au moins l'un des matériaux suivants : RbO₂, Bi₂Ru₂O₇, C, Ti₂N, LaB₆.

9. Composant électrique multicouche selon l'une des revendications précédentes, dans lequel la structure de blindage (4) est disposée entre deux couches d'électrode (3).

10. Composant électrique multicouche selon l'une des revendications précédentes, dans lequel le corps de base (1) présente une électrode de masse (8) qui coopère avec plusieurs couches d'électrode (3).

11. Composant électrique multicouche selon l'une des revendications précédentes, qui présente au moins un condensateur multicouche formé par des couches diélectriques (2) et des couches d'électrode (3) empilées les unes au-dessus des autres.

12. Composant électrique multicouche selon l'une des revendications précédentes, qui présente au moins un varistor multicouche formé par des couches diélectriques (2) et des couches d'électrode (3) empilées les unes au-dessus des autres.

13. Composant électrique multicouche selon l'une des revendications 1 à 12, dans lequel au moins une capacité est formée par une paire constituée d'une couche diélectrique (2) et d'une couche d'électrode (3) et coopère avec une résistance pour former un filtre passe-bas.
